# EUROPEAN PATENT APPLICATION

(11) **EP 3 166 016 A1**
(43) Date of publication of application: **10.05.2017**
(21) Application number: 15814315.6
(22) Date of filing: 26.06.2015
(51) Int. Cl.: G06F 9/44, G06Q 10/10

(54) **COMBINATORY WORKING METHOD FOR STANDARDIZED ELEMENTS IN PERSONAL WORKSPACE, AND COMPUTER PROGRAM PRODUCT AND SYSTEM USING SAID METHOD**

(30) Priority: 03.07.2014 US 201414324069; 08.07.2014 US 201414325466; 18.12.2014 CN 201410796528
(71) Applicant: Able World International Limited, Tortola (VG)
(72) Inventor: CHEUNG, Waitung, Hong Kong (CN); LIN, Chunhsiao, New Taipei City 244 (TW); LAN, Shihcheng, Taipei City 116 (TW); CHEUNG, Hocheung, Hong Kong (CN)
(74) Representative: Chew, Kwan Chong Daniel
(86) International application number: PCT/CN2015/082434
(87) International publication number: WO 2016/000565

(57) **Abstract**

The present invention provides a method for combining unified matters in a personal workspace and a computer program product and a system using the method. The method includes the following steps. In a step (i), at least one matterizer is provided to the personal workspace, wherein at least one unified information unit corresponding to at least one original information and/or at least one unified tool corresponding to at least one original tool is acquired from at least one information source via the at least one matterizer. In a step (ii), the at least one unified information unit and/or the at least one unified tool is provided to the personal workspace via the at least one matterizer. In a step (iii), by using the at least one unified tool and/or the at least one unified information unit, a task is performed. The present invention provides a user-orientated unified personal workspace. Consequently, the problem of blocking the freedom of the data/information by the independence and incompatibleness of the websites, operation systems and applications will be overcome.

## Description

### FIELD OF THE INVENTION

The present invention relates to a method for combining unified matters in a personal workspace and a computer program product and a system using the method.

### BACKGROUND OF THE INVENTION

Currently, many websites, operation systems or applications are rapidly developed and become increasingly popular. These websites, systems and applications provide convenience and changes for users but also bring problems to the users because they are independent and incompatible with one another. In other words, the software vendors individually develop websites, systems or applications which do not share a unified mechanism. As a result, different operation systems and applications cannot cooperatively operate even with respect to data or tasks of the same class. Therefore, the users need to open many working interfaces of the applications and use specific functions or services of them for performing a task at present. Since there is no unified workspace to integrate these applications, it is complicated, inefficient and even infeasible for the users to perform the task.

For example, a user can use Photoshop or Photo Impact to complete an image processing task. Photo Impact provides a simple module for the user to easily process an image, and Photoshop provides a professional tool for advanced processing. If the user wants to apply a specific function or tool of Photoshop and a specific function or tool of PhotoImpact to process the image at the same time, the user needs to respectively operate Photoshop and Photo Impact at present. Although these two applications can be applied in the same operation system, the tools of PhotoImpact are not allowed to be applied into the interface of Photoshop. In general, the tools or functions of the current applications are unable to be applied mutually. The user cannot use a single working environment or workspace to access or apply all of the functions or services of these applications. Therefore, the independence and incompatibleness of these websites, operation systems and applications block the freedom of the data/information exchange and the utilization of the functions or tools.

At present, a user can obtain much data or information from different information sources such as website, cloud storage, or computer device. These information sources have isolated operation interfaces, respectively. Therefore, these data or information are restricted by these isolated interfaces and are not easy or free for the user to transfer, access, or integrate. In the above situation, it is troublesome for the user in performing the work to process data or information which are scattered in various information sources. For this reason, the user may need a workspace to unify these data or information from the different information sources, and to provide a centralized interface to integrate and process these data or information efficiently.

In addition, the updated software versions in the operation systems also make trouble to a user. Because a current operation system only permits one software version for each application, the user must choose one software version to use. Although the updated software provides a new and convenient function or service to the user, some users may still prefer to use the function or service of the old version because of some reasons (e.g., using habits). However most software vendors once provide the function or service of the new version, they will stop furnishing function or service of the old version. Therefore, the users are unable to freely choose the functions of the old versions they likes. Thus, the user needs a workspace which allows the collaborative operation of many services supported by different software versions.

Accordingly, what is needed is a unified workspace that permits any application or service of the different websites, operation systems or applications to be performed and provides a user with a free arrangement mechanism of these applications or services to create a personal working environment.

### SUMMARY OF THE INVENTION

As mentioned above, the independence and incompatibleness of the existing websites, operation systems and applications block the freedom of the data/information. For solving these drawbacks, the present invention provides a method for combining unified matters in personal workspace and a computer program product and a system using the method.

In accordance with an aspect of the present invention, there is provided a method for combining unified matters in a personal workspace. The method includes the following steps. In a step (i), at least one matterizer is provided to the personal workspace, wherein at least one unified information unit corresponding to at least one original information and/or at least one unified tool corresponding to at least one original tool is acquired from at least one information source via the at least one matterizer. In a step (ii), the at least one unified information unit and/or the at least one unified tool is provided to the personal workspace via the at least one matterizer. In a step (iii), a task is performed by using the at least one unified tool and/or the at least one unified information unit.

In an embodiment, the at least one matterizer includes at least one information importer. The at least one unified information unit is provided to the personal workspace after the at least one original information is unified into the at least one unified information unit via the at least one information importer, and/or the at least one unified tool is provided to the personal workspace after the at least one original tool is unified into the at least one unified tool via the at least one information importer.

In an embodiment, the at least one matterizer includes at least one built-in matterizer that is built in the personal workspace and/or at least one plug-in matterizer that is plugged in the personal workspace.

In an embodiment, the at least one unified tool obtained via the at least one matterizer includes at least one additional matterizer.

In an embodiment, before the step (i), the method further includes a step of providing the at least one unified information unit and/or the at least one unified tool to a built-in information source of the at least one information source.

In an embodiment, the built-in information source includes a unified script, wherein the unified script is used as an intermediate language in the personal workspace.

In an embodiment, the at least one unified information unit includes at least one built-in unified information unit that is built in the personal workspace and/or at least one plug-in unified information unit that is plugged in the personal workspace. The at least one unified tool includes at least one built-in unified tool that is built in the personal workspace and/or at least one plug-in unified tool that is plugged in the personal workspace.

In an embodiment, the personal workspace is a working environment or a platform including a microkernel to host the at least one matterizer, the at least one unified information unit and/or the at least one unified tool.

In an embodiment, the microkernel provides the at least one matterizer, the at least one unified information unit and/or the at least one unified tool to the personal workspace via a unified script which is used as an intermediate language.

In an embodiment, the united script is declared by a document type definition (DTD), an extensible markup language (XML) Schema, a structured language or a structured protocol.

For example, in the step (i), the at least one matterizer is provided to the personal workspace via a united script.

For example, in the step (ii), the at least one unified information unit and/or the at least one unified tool is provided to the personal workspace via a unified script.

In an embodiment, if the at least one original tool is a compatible tool, the at least one original tool acquired from the at least one information source is directly provided to the personal workspace via the unified script. Whereas, if the at least one original tool is an incompatible tool, the at least one original tool acquired from the at least one information source is indirectly provided to the personal workspace via a compatible adapter and the unified script.

In an embodiment, the at least one unified tool includes the compatible tool and/or the compatible adapter.

For example, in the step (iii), the at least one unified tool is used for accessing or controlling the corresponding unified information unit of the at least one unified information unit.

For example, in the step (iii), a preset unified tool for supporting the at least one unified information unit is chosen to access or control the at least one unified information unit according to an attribute of the at least one unified information unit via the personal workspace.

For example, in the step (iii), one unified information unit of the at least one unified information unit to be accessed or controlled is dragged and dropped into the corresponding unified tool of the at least one unified tool, so that the unified information unit of the at least one unified information unit to be accessed or controlled is accessible or controllable; or one of the at least one unified tool is dragged and dropped into the unified information unit of the at least one unified information unit to be accessed or controlled, so that the unified information unit of the at least one unified information unit to be accessed or controlled is accessible or controllable.

In an embodiment, the method further includes a step of grouping and placing the at least one unified information unit and/or the at least one unified tool in a specific area of the personal workspace.

In an embodiment, the method further includes a step of adding or deleting the at least one unified information unit in the personal workspace and/or loading or unloading the at least one unified tool in the personal workspace.

In an embodiment, the at least one information source includes an internet service, a storage medium of a non-transitory computer or a storage medium of a mobile device, and/or the at least one original information includes a file, a web page, a database row, a policy, a rule, or any information accessible from a corresponding machine or a server, and/or the at least one original tool includes a utility, a widget, an intelligent agent, an application, a service or any executable element accessible from a corresponding machine or a server.

In an embodiment, the at least one unified information unit includes a metadata of the at least one unified tool.

In accordance with another aspect of the present invention, there is provided a method for combining unified matters in a personal workspace. The method includes the following steps. Firstly, at least one matterizer, at least one unified information unit corresponding to at least one original information and/or at least one unified tool corresponding to at least one original tool are provided to the personal workspace via a unified script. Then, a task is performed by using the at least one unified tool and/or the at least one unified information unit.

In an embodiment, the at least one matterizer includes at least one information importer. The at least one unified information unit is provided to the personal workspace after the at least one original information is unified into the at least one unified information unit via the at least one information importer, and/or the at least one unified tool is provided to the personal workspace after the at least one original tool is unified into the at least one unified tool via the at least one information importer.

In an embodiment, the united script is declared by a document type definition (DTD), an extensible markup language (XML) Schema, a structured language or a structured protocol.

In accordance with another aspect of the present invention, there is provided a computer program product for performing a task in a personal workspace. The computer program product includes a program code. While the computer program product is executed in a computer, the program code performs the following steps. Firstly, at least one matterizer, at least one unified information unit corresponding to at least one original information and/or at least one unified tool corresponding to at least one original tool are provided to the personal workspace via a unified script. Then, the task is performed by using the at least one unified tool and/or the at least one unified information unit.

In an embodiment, the at least one matterizer includes at least one information importer. The at least one unified information unit is provided to the personal workspace after the at least one original information is unified into the at least one unified information unit via the at least one information importer, and/or the at least one unified tool is provided to the personal workspace after the at least one original tool is unified into the at least one unified tool via the at least one information importer.

In an embodiment, the united script is declared by a document type definition (DTD), an extensible markup language (XML) Schema, a structured language or a structured protocol.

In accordance with another aspect of the present invention, there is provided a system for combining unified matters in a personal workspace. The system includes a first means and a second means. The first means is used for allowing at least one matterizer, at least one unified information unit corresponding to at least one original information and/or at least one unified tool corresponding to at least one original tool to be provided to the personal workspace via a unified script. The second means is used for performing a task by using the at least one unified tool and/or the at least one unified information unit.

In an embodiment, the at least one matterizer includes at least one information importer. The at least one unified information unit is provided to the personal workspace after the at least one original information is unified into the at least one unified information unit via the at least one information importer, and/or the at least one unified tool is provided to the personal workspace after the at least one original tool is unified into the at least one unified tool via the at least one information importer.

In an embodiment, the united script is declared by a document type definition (DTD), an extensible markup language (XML) Schema, a structured language or a structured protocol.

The present invention provides a user-orientated unified personal workspace. The present invention has the following advantages.

Firstly, when compared with the conventional operating system, the personal workspace brings no boundary in sharing different information sources from internet. That is, the original information and the original tool from different information sources are respectively unified into a unified information unit and a unified tool in a personal workspace dedicated to a user, and the unified tool can be used to process the unified information unit for completing some specific tasks. Consequently, all of the original information and the original tools form different information sources will be used by the user in the personal workspace.

Secondly, the unified information unit and the unified tool in the personal workspace can be interactive. That is, the unified tool is allowed to process a corresponding unified information unit.

Thirdly, when an operating system is updated, other software may encounter incompatible problems causing inconveniences to the users. The users are forced to learn new operating system as well as the updated version of software. The present invention creates a personal workspace without new version update problem when compared with other operating systems.

Fourthly, the present invention provides a user-orientated personal workspace. That is, ideal unified information units or ideal unified tools are configured in the personal workspace according to the practical requirements of the user.

Fifthly, the personal workspace is able to access and control the multiple original data from the different information sources.

The above objects and advantages of the present invention will become more readily apparent to those ordinarily skilled in the art after reviewing the following detailed description and accompanying drawings, in which:

### BRIEF DESCRIPTION OF THE DRAWINGS

FIG. 1 is a schematic diagram illustrating an implementation concept of a unifying method according to an embodiment of the present invention;
FIG. 2 is a flowchart illustrating a method for combining unified matters in a personal workspace according to an embodiment of the present invention;
FIG. 3 is a schematic diagram illustrating an implementation concept of providing at least one matterizer to a personal workspace in the step 110 of FIG. 2 via a unified script;
FIG. 4 is a schematic diagram illustrating an implementation concept of allowing the unified tool corresponding to the original tool to be provided to (e.g., built in or plugged in) the personal workspace in the step 120 of FIG. 2;
FIG. 5 is a schematic diagram illustrating an implementation concept of arranging the unified information units and the unified tools in the personal workspace according to an embodiment of the present invention;
FIG. 6 is a schematic diagram illustrating an implementation concept of implementing the step 130 of FIG. 2;
FIG. 7 is a schematic block diagram illustrating a computer program product using the method of FIG. 2;
FIG. 8 is a schematic block diagram illustrating a system for performing the method of FIG. 2;
FIG. 9 is a schematic diagram illustrating an implementation concept of a unifying method according to another embodiment of the present invention; and
FIG. 10 is a schematic diagram illustrating an implementation concept of allowing the unified tool corresponding to the original tool to be provided to the personal workspace in the step 110 of FIG. 2 according to the unifying method of FIG. 9.

### DETAILED DESCRIPTION OF THE PREFERRED EMBODIMENT

The present invention is more fully appreciated by reference to the following description, including the following glossary of terms and the concluding examples. For the sake of brevity, the disclosures of the publications, including patents, cited in this specification are herein incorporated by reference.

The examples below are non-limiting and are merely representative of various aspects and features of the present invention. The term "information source" used herein is defined as a sequence of symbols that can be interpreted as a message in the most limited technical meaning. And the message is used for organizing and labeling information. For example, the information source includes website (such as internet service), intranet, social network, software, electronic book, database and other media of information (such as a storage medium of a non-transitory computer or a storage medium of a mobile device). The term "original information" used herein is a file, a webpage, a database row, a policy, a rule or any data accessible in corresponding machines and servers, but is not limited thereto. The term "original tool" used herein is a utility, a widget, an intelligent agent, an application, a service or any executable component accessible in corresponding machines and servers, but is not limited thereto. It is noted that the information sources, the original information and the original tool are not restricted to the above examples.

Moreover, "original information" and "original tool" are implementation examples of "original matters" used herein. In accordance with the present invention, a plurality of "original matters" from identical or different "information sources" are modeled to a plurality of "unified matters" by a unifying method. Consequently, the "unified matters" in the same execution environment are compatible with each other and cooperate to perform a specified task. The "unified tool" and the "unified information unit" are implementation examples of the "unified matters". Moreover, the term "Matterizer" used herein is a means, a device or a program code to perform the unifying process.

In an embodiment, the above unifying method comprises steps of: modeling at least one original information obtained from at least one information source of multiple information sources into a unified information unit with one unified data model via re-organizing the original information, and/or modeling at least one original tool obtained from at least one information source of multiple information sources into a unified tool with another unified data model via re-organizing the original tool. The one unified data model and another unified data model could be identical or different, and the unifying method described above could be completed through a matterizer.

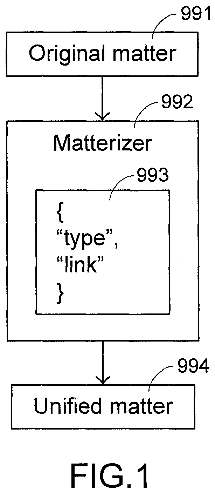

Please refer to FIG. 1. FIG. 1 is a schematic diagram illustrating an implementation concept of a unifying method according to an embodiment of the present invention. As shown in FIG. 1, the matterizer 992 re-organizes an attribute and a link of an original matter 991 with a unified data model 993, and thus models the original matter 991 into a unified matter 994. Consequently, the basic attributes of the unified matter 994 include a type of the original matter 994 and a link indicating where the original matter 994 is located.

In this embodiment, the original matter 991 at least includes an original information (not shown) or an original tool (not shown), but is not limited thereto. In the above unifying method, if the attributes accessible from the original information correspond to the attributes to be unified in the unified information unit, the unified information unit is directly produced through the matterizer 992. If the attributes accessible from the original information do not correspond to the attributes to be unified in the unified information unit, the original information is firstly re-defined by logically re-organizing the attributes and the link of the original information, and then the original information is converted into a new original information with the attributes which correspond to attributes to be unified in the unified information unit. Consequently, the unified information unit is indirectly produced.

Moreover, if the original tool is compatible with the working environment of the workspace, the unified tool is directly produced by the matterizer 992. On the other hand, if the original tool is incompatible with the working environment of the workspace, the unified tool is indirectly produced via an adapter and/or a software development kit (SDK) of the original tool to drive the original tool. The adapter provides an interface implementation compatible with the working environment.

Herein, "the descriptions of the unifying method", "the methods of obtaining the unified matters" and "the descriptions of the matterizer" may be referred to the US Patent Application No. 14/324,069, entitled "A method of unifying information and tool from a plurality of information sources", and also referred to the China Patent Application No. 201410768564.X, which claims the benefit of priority to the US Patent Application No. 14/324,069 and is entitled "A method of unifying information and tool from a plurality of information sources and computer product and device using the method". The detailed descriptions thereof are omitted.

The above unifying method is presented herein for purpose of illustration and description only. The method of unifying a plurality of original matters from different information sources is not restricted. However, those skilled in the art will readily observe that numerous modifications and alterations may be made while retaining the teachings of the invention.

Hereinafter, two other unifying methods will be illustrated. The first unifying method is applied to a method of unifying the information of Garmin satellite navigation. Through a point-of-interest (POI) function of the Garmin satellite navigation, the method of unifying the information is employed to unify the imported original point information (i.e., an original information) into the corresponding unified point information (i.e., a unified information unit). The second unifying method is applied to a method of unifying the tool of an Android system. The Android system is a Linux-based open source mobile operating system. However, most application programs (i.e., original tools) are written in the Java programming language. Consequently, the application program (i.e., the original tool) written in the Java programming language can be modeled into a unified application program (i.e., the unified tool) compatible with the Android system so as to be executed in the Android system.

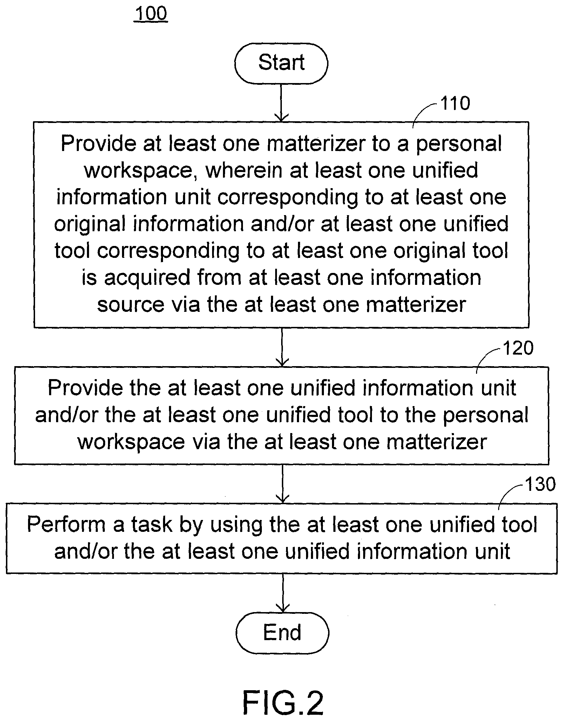

A method of providing a user-orientated personal workspace for a user will be illustrated as follows. FIG. 2 is a flowchart illustrating a method for combining unified matters in a personal workspace according to an embodiment of the present invention. The method 100 comprises the following steps: In a step 110: at least one matterizer is provided to a personal workspace, wherein at least one unified information unit corresponding to at least one original information and/or at least one unified tool corresponding to at least one original tool is acquired from at least one information source via the at least one matterizer. In a step 120, the at least one unified information unit and/or the at least one unified tool is provided to the personal workspace via the at least one matterizer. In a step 130, a task is performed by using the at least one unified tool and/or the at least one unified information unit.

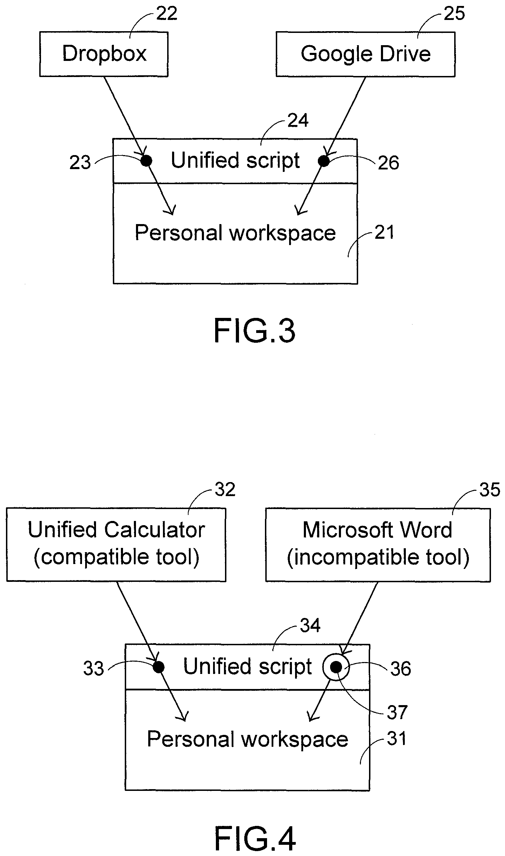

First of all, a unified script as an intermediate language for realizing the present invention is edited. The matterizers with converting functions of different formations are allowed to be provided to (e.g., built in or plugged in) the unified script. The converting function can convert the original information from different information sources into the unified information unit and convert the original tool from different information sources into the unified tool. Preferably but not exclusively, the united script is declared by a document type definition (DTD), an extensible markup language (XML) Schema, a structured language or a structured protocol. The matterizer can be implemented as Java Bean, COM, or any kind of pluggable component architecture. Hereinafter, information importers such as the information importer 23 of Dropbox 22 (see FIG. 3) and the information importer 26 of Google Drive 25 (see FIG. 3) and the information importer 33 (see FIG. 4) are some examples of the matterizer.

Moreover, according to different tasks, the required unified information units and/or the required unified tools from the corresponding information sources can be collected into the personal workspace. The unified information units and/or the unified tools are obtained from parts or the entire of a plurality of information sources and then modeled. Moreover, the personal workspace is a working environment or a platform comprising a microkernel to host the matterizers, the unified information units and the unified tools. The microkernel can provide the matterizers, the unified information units and the unified tools to the projected workspace via the unified script.

FIG. 3 is a schematic diagram illustrating an implementation concept of providing at least one matterizer to a personal workspace in the step 110 of FIG. 2 via a unified script. As shown in FIG. 3, the unified script 24 is used as an intermediate language in the personal workspace 21. Moreover, the information importer 23 of Dropbox 22 and the information importer 26 of Google Drive 25 are configurable through the unified script 24. After a unifying process, the information importer 23 of Dropbox 22 and the information importer 26 of Google Drive 25 are allowed to enter together into the same personal workspace 21.

In this embodiment, the information source in the personal workspace 21 is Dropbox 22, and the information importer 23 of Dropbox 22 is a software component capable of unifying the information of Dropbox 22 into the unified information unit. The Dropbox matterizer is configurable through the unified script 24, and may be one of source providers for the personal workspace 21.

Moreover, another information source in the personal workspace 21 is Google Drive 25, and the information importer 26 of Google Drive 25 is a software component capable of unifying the information of Google Drive 25 into the unified information unit. Similarly, the Google Drive matterizer is configurable through the unified script 24, and may be one of source providers for the personal workspace 21.

As mentioned above, the required unified information units and/or the required unified tools from the corresponding information sources can be collected into the personal workspace according to different tasks. The original tools are classified into compatible tools and incompatible tools. If the original tool is the compatible tool, the original tool acquired from the at least one information source is directly provided to (e.g., built in or plugged in) the personal workspace via the unified script. Whereas, if the original tool is the incompatible tool, the original tool acquired from the at least one information source is indirectly provided to (e.g., built in or plugged in) the personal workspace via a compatible adapter and the unified script. Moreover, both of the compatible tool and the incompatible tool are regarded as unified tools.

FIG. 4 is a schematic diagram illustrating an implementation concept of allowing the unified tool corresponding to the original tool to be provided to (e.g., built in or plugged in) the personal workspace in the step 120 of FIG. 2. First of all, the condition that the original tool is the compatible tool will be described. As shown in FIG. 4, one original tool is a Unified Calculator tool 32 in an information source. Since the component interface of the Unified Calculator tool 32 is compatible with the component architecture for the unified tool in a personal workspace 31, it is supposed that the Unified Calculator tool 32 is a compatible unified tool and the Unified Calculator tool 32 with a specific function is able to be directly provided to (e.g., built in or plugged in) a personal workspace 31 via a unified script (i.e., through an information importer 33).

Next, the condition that the original tool is the incompatible tool will be described. As shown in FIG. 4, another original tool is a Microsoft Word tool 35 in another information source. Since the component interface of the Microsoft Word tool 35 is incompatible with the component architecture for the unified tool in the personal workspace 31, an adapter 36 compatible with the component architecture for the unified tool in the personal workspace 31 is required. Then, the incompatible Microsoft Word tool 35 with a specific function is able to be directly provided to (e.g., built in or plugged in) a personal workspace 31 via a unified script (i.e., through a compatible information importer 36 and an information importer 37). As mentioned in FIG. 4, both of the compatible tool and the incompatible tool can be unified into the same personal workspace 31 in order to perform a specified task.

In an embodiment, the matterizer to be provided to the personal workspace is a built-in matterizer that is added to personal workspace in a built-in manner, for example the matterizer that is previously edited into the unified script and added to the personal workspace during the process of opening the personal workspace (e.g., regarded as a preset matterizer). Alternatively, in another embodiment, the matterizer to be provided to the personal workspace is a plug-in matterizer that is added to personal workspace in a plug-in manner, for example another matterizer that is added to the personal workspace through the preset matterizer after the personal workspace is opened. In particular, in an embodiment, any matterizer can be regarded as a unified tool. That is, the matterizer is present in the personal workspace in the form of the unified tool.

Similarly, the unified information unit to be provided to the personal workspace is a built-in unified information unit that is added to personal workspace in a built-in manner, for example the unified information unit that is previously edited into the unified script and added to the personal workspace during the process of opening the personal workspace (e.g., regarded as a preset unified information unit and provided to the personal workspace through the corresponding matterizer). Alternatively, the unified information unit to be provided to the personal workspace is a plug-in unified information unit that is added to personal workspace in a plug-in manner, for example the unified information unit that is added to the personal workspace through the corresponding matterizer after the personal workspace is opened.

Similarly, the unified tool to be provided to the personal workspace is a built-in unified tool that is added to personal workspace in a built-in manner, for example the unified tool that is previously edited into the unified script and added to the personal workspace during the process of opening the personal workspace (e.g., regarded as a preset unified tool and provided to the personal workspace through the corresponding matterizer). Alternatively, the unified tool to be provided to the personal workspace is a plug-in unified tool that is added to personal workspace in a plug-in manner, for example the unified tool that is added to the personal workspace through the corresponding matterizer after the personal workspace is opened.

In another embodiment, before the step 110 of FIG. 2, the method further comprises a step of providing the at least one unified information unit and/or the at least one unified tool to a built-in information source of the at least one information source. The above unified script is an example of the built-in information source. Consequently, the unified information unit provided to the unified script before the step 110 is regarded as the built-in unified information unit (or the preset unified information unit), and the unified tool provided to the unified script before the step 110 is regarded as the built-in unified tool (or the preset unified tool).

Moreover, the above unified information unit may include a metadata of the unified tool. The example of the metadata will be illustrated as follows. It is noted that example of the metadata is not restricted. For example, via the matterizer 992 of FIG. 1 (corresponding to the information importer 33 of FIG. 4), the Unified Calculator tool 32 of FIG. 4 is modeled to the following profile according to a unified data model 993 thereof. This profile may be regarded as the metadata of the unified tool corresponding to the Unified Calculator tool 32.

```
     {
     "type": "tool/widget",
     "link":"The url to access Unified Calculator"
     }
```

Moreover, any application program product shown on the APP store (Apple Computer, Inc.) before loading to the electronic device (e.g., a mobile phone or a tablet computer) of the user may be regarded as the metadata corresponding to the application program product.

In an embodiment, the personal workspace is equipped with a plurality of unified tools. Moreover, the functional feature provided by each unified tool can display or interpret a specified unified information unit. That is, after the at least one original tool is unified into the unified tool via the unified script, a task can be accomplished by using at least one unified tool to process the corresponding unified information unit. In addition, when discussing the representation of the unified tool of the present invention, a recognizable icon or a visible object can be used for remarking its operable function. An example of the unified tool includes but is not limited to a card icon, and each unified tool has a specific function.

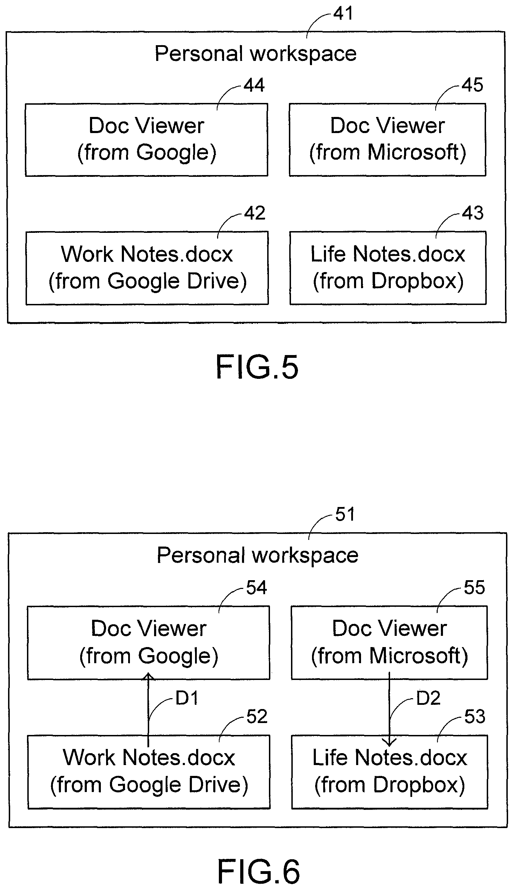

In an embodiment, the unified information units and the unified tools added to the personal workspace can be arranged by the user. FIG. 5 is a schematic diagram illustrating an implementation concept of arranging the unified information units and the unified tools in the personal workspace according to an embodiment of the present invention. As shown in FIG. 5, the unified information units include Work Notes.docx 42 from Google Drive (i.e., an information source) and Life Notes.docx 43 from Dropbox (i.e., an information source), and the unified tools include a Doc Viewer tool 44 from Google (i.e., an information source) and a Doc Viewer tool 45 from Microsoft (i.e., an information source). Moreover, as shown in FIG. 5, the user groups and places the unified information units and the unified tools in a specific area of the personal workspace 41 in the arranging process.

Then, the step 130 of FIG. 2 will be illustrated. Moreover, according to the operational relationship between the unified tool and the unified information unit (e.g., the clicking or dragging actions between the two), the user can perform a specified task by using the unified tool to access or control the corresponding unified information unit.

Hereinafter, the process of implementing the step 130 of FIG. 2 will be illustrated with reference to FIG. 6. FIG. 6 also illustrates an implementation concept of processing the unified information unit with the unified tool and the interaction between the unified tool and the unified information unit according to an embodiment of the present invention. As shown in FIG. 6, the unified information units include Work Notes.docx 52 from Google Drive (i.e., an information source) and Life Notes.docx 53 from Dropbox (i.e., an information source), and the unified tools include a Doc Viewer tool 54 from Google (i.e., an information source) and a Doc Viewer tool 55 from Microsoft (i.e., an information source).

If the user intends to view at least one unified information unit (e.g., Work Notes.docx 52 from Google Drive and/or Life Notes.docx 53 from Dropbox), the corresponding unified tool (e.g., Doc Viewer from Google and/or Doc Viewer from Microsoft) is necessarily introduced into a personal workspace 51. Then, some view actions in the personal workspace 51 are thus associated with clicking or dragging actions.

The relationships between the view actions and the clicking actions will be illustrated as follows. In an embodiment, the user may directly click one unified information unit and select a supporting unified tool in the personal workspace 51 for viewing the clicked file upon the clicked file attribute. For example, if the user clicks Work Notes.docx 52 and selects the Doc Viewer tool 54 in the personal workspace 51, the user can view Work Notes.docx 52. In another embodiment, for viewing the expected original information, several dragging actions between the unified information unit and the unified tool can be set up.

The relationships between the view actions and the dragging actions will be illustrated as follows. In a first condition, the unified information unit to be accessed or controlled is dragged and dropped into the corresponding unified tool, so that the unified information unit is accessible or controllable. For example, after the user drags Work Notes.docx 52 and drops the same into the Doc Viewer tool 54 in the direction indicated by the arrow D1, the user can view Work Notes.docx 52. In a second condition, the unified tool for accessing or controlling the unified information unit is dragged and dropped into the unified information unit to be accessed or controlled, so that the unified information unit is accessible or controllable. For example, after the user drags Life Notes.docx 53 and drops the same into the Doc Viewer tool 55 in the direction indicated by the arrow D2, the user can view Life Notes.docx 53.

In an embodiment, during the process of operating the personal workspace or during the process of performing the task, the user can add or delete at least one unified information unit in the personal workspace and/or load or unload at least one unified tool in the personal workspace so as to meet the user's requirement. Moreover, if any, the features of some unified tools and the unified information units can be combined into a software package. Thus, it is easier for the user to perform specific tasks, for example the tasks of searching/completing the contents of the files in a particular project.

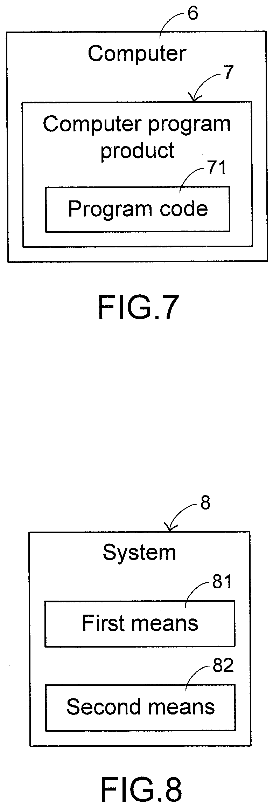

FIG. 7 is a schematic block diagram illustrating a computer program product using the method of FIG. 2. For example, the computer program product 7 is a software package. The computer program product 7 is used for performing a task in a personal workspace. Moreover, the computer program product 7 contains a program code 71. The program code 71 can perform the method of FIG. 2 while the computer program product 7 is executed in a computer 6. The method comprises steps of allowing at least one matterizer, at least one unified information unit corresponding to at least one original information and/or at least one unified tool corresponding to at least one original tool to be provided to the personal workspace via a unified script, and performing a task by using the at least one unified tool and/or the at least one unified information unit. The implementations of these steps are similar to those mentioned above, and the detailed descriptions thereof are omitted.

FIG. 8 is a schematic block diagram illustrating a system for performing the method of FIG. 2. As shown in FIG. 8, the system 8 comprises a first means 81 and a second means 82. The first means 81 allows at least one matterizer, at least one unified information unit corresponding to at least one original information and/or at least one unified tool corresponding to at least one original tool to be provided to the personal workspace via a unified script. The second means 82 performs a task by using the at least one unified tool and/or the at least one unified information unit. The implementations of these steps are similar to those mentioned above, and the detailed descriptions thereof are omitted.

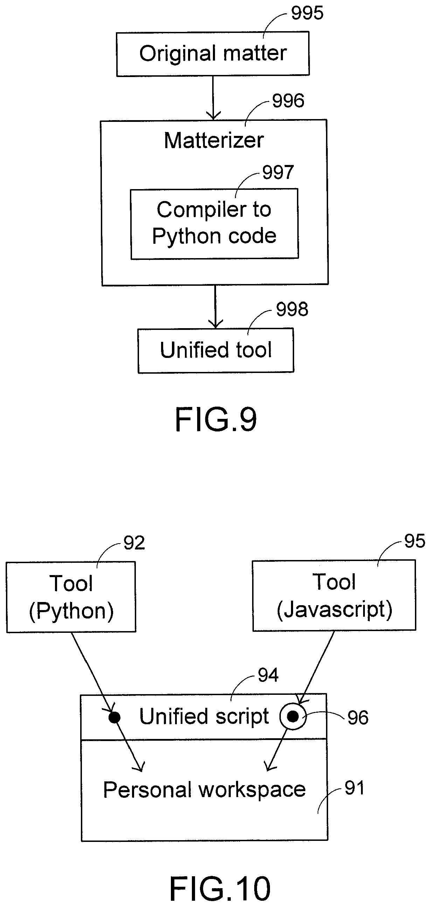

Another unifying method as shown in FIG. 9 will be illustrated as follows. The unified matter obtained by this unifying method can be also applied to the method of FIG. 2. Please refer to FIGS. 9 and 10. FIG. 9 is a schematic diagram illustrating an implementation concept of a unifying method according to another embodiment of the present invention. FIG. 10 is a schematic diagram illustrating an implementation concept of allowing the unified tool corresponding to the original tool to be provided to the personal workspace in the step 110 of FIG. 2 according to the unifying method of FIG. 9.

As shown in FIG. 9, an original tool 995 in any language is modeled into a unified tool 998 in a Python language via a matterizer 996 according to a unified data model 997. Consequently, the process of unifying the original tool 995 is completed. As shown in FIG. 10, the original tools include a tool 92 and a tool 95. The tool 92 is obtained from an information source and written in the Python language. The tool 95 is obtained from another information source and written in a Javascript language. A unified script 94 is written in the Python language. Consequently, any unified tool written in the Python language is compatible with the component architecture for the unified tool in a personal workspace 91. Since the tool 92 in the Python language is the compatible tool, the tool 92 in the Python language can be directly provided to the personal workspace 91 via the unified script 94. The tool 95 in the Javascript language is an incompatible tool. Consequently, after the tool 95 in the Javascript language is dynamically compiled as the Python structure via an adapter 96 compatible with the component architecture for the unified tool in a personal workspace 91, the tool 95 is provided to the personal workspace 91. As mentioned in FIG. 10, both of the compatible tool and the incompatible tool can be unified into the same personal workspace in order to perform a specified task.

From the above descriptions, the present invention provides a user-orientated unified personal workspace. The present invention has the following advantages.

Firstly, when compared with the conventional operating system, the personal workspace brings no boundary in sharing different information sources from internet. That is, the original information and the original tool from different information sources are respectively unified into a unified information unit and a unified tool in a personal workspace dedicated to a user, and the unified tool can be used to process the unified information unit for completing some specific tasks. Consequently, all of the original information and the original tools form different information sources will be used by the user in the personal workspace.

Secondly, the unified information unit and the unified tool in the personal workspace can be interactive. That is, the unified tool is allowed to process a corresponding unified information unit.

Thirdly, when an operating system is updated, other software may encounter incompatible problems causing inconveniences to the users. The users are forced to learn new operating system as well as the updated version of software. The present invention creates a personal workspace without new version update problem when compared with other operating systems.

Fourthly, the present invention provides a user-orientated personal workspace. That is, ideal unified information units or ideal unified tools are configured in the personal workspace according to the practical requirements of the user.

Fifthly, the personal workspace is able to access and control the multiple original data from the different information sources.

While the invention has been described in terms of what is presently considered to be the most practical and preferred embodiments, it is to be understood that the invention needs not be limited to the disclosed embodiments. On the contrary, it is intended to cover various modifications and similar arrangements included within the spirit and scope of the appended claims which are to be accorded with the broadest interpretation so as to encompass all such modifications and similar structures.

## Claims

1. A method for combining unified matters in a personal workspace, the method comprising steps of:
(i) providing at least one matterizer to the personal workspace, wherein at least one unified information unit corresponding to at least one original information and/or at least one unified tool corresponding to at least one original tool is acquired from at least one information source via the at least one matterizer;
(ii) providing the at least one unified information unit and/or the at least one unified tool to the personal workspace via the at least one matterizer; and
(iii) performing a task by using the at least one unified tool and/or the at least one unified information unit.

2. The method according to claim 1, wherein the at least one matterizer comprises at least one information importer, wherein the at least one unified information unit is provided to the personal workspace after the at least one original information is unified into the at least one unified information unit via the at least one information importer, and/or the at least one unified tool is provided to the personal workspace after the at least one original tool is unified into the at least one unified tool via the at least one information importer.

3. The method according to claim 1, wherein the at least one matterizer includes at least one built-in matterizer that is built in the personal workspace and/or at least one plug-in matterizer that is plugged in the personal workspace.

4. The method according to claim 1, wherein the at least one unified tool obtained via the at least one matterizer includes at least one additional matterizer.

5. The method according to claim 1, wherein before the step (i), the method further comprises a step of providing the at least one unified information unit and/or the at least one unified tool to a built-in information source of the at least one information source.

6. The method according to claim 5, wherein the built-in information source includes a unified script, wherein the unified script is used as an intermediate language in the personal workspace.

7. The method according to claim 1, wherein the at least one unified information unit includes at least one built-in unified information unit that is built in the personal workspace and/or at least one plug-in unified information unit that is plugged in the personal workspace, wherein the at least one unified tool includes at least one built-in unified tool that is built in the personal workspace and/or at least one plug-in unified tool that is plugged in the personal workspace.

8. The method according to claim 1, wherein the personal workspace is a working environment or a platform comprising a microkernel to host the at least one matterizer, the at least one unified information unit and/or the at least one unified tool.

9. The method according to claim 8, wherein the microkernel provides the at least one matterizer, the at least one unified information unit and/or the at least one unified tool to the personal workspace via a unified script which is used as an intermediate language.

10. The method according to claim 9, wherein the united script is declared by a document type definition, an extensible markup language schema, a structured language or a structured protocol.

11. The method according to claim 1, wherein in the step (i), the at least one matterizer is provided to the personal workspace via a united script.

12. The method according to claim 1, wherein in the step (ii), the at least one unified information unit and/or the at least one unified tool is provided to the personal workspace via a unified script.

13. The method according to claim 12, wherein if the at least one original tool is a compatible tool, the at least one original tool acquired from the at least one information source is directly provided to the personal workspace via the unified script, wherein if the at least one original tool is an incompatible tool, the at least one original tool acquired from the at least one information source is indirectly provided to the personal workspace via a compatible adapter and the unified script.

14. The method according to claim 13, wherein the at least one unified tool includes the compatible tool and/or the compatible adapter.

15. The method according to claim 1, wherein in the step (iii), the at least one unified tool is used for accessing or controlling the corresponding unified information unit of the at least one unified information unit.

16. The method according to claim 1, wherein in the step (iii), a preset unified tool for supporting the at least one unified information unit is chosen to access or control the at least one unified information unit according to an attribute of the at least one unified information unit via the personal workspace.

17. The method according to claim 1, wherein in the step (iii), one unified information unit of the at least one unified information unit to be accessed or controlled is dragged and dropped into the corresponding unified tool of the at least one unified tool, so that the unified information unit of the at least one unified information unit to be accessed or controlled is accessible or controllable; or one of the at least one unified tool is dragged and dropped into the unified information unit of the at least one unified information unit to be accessed or controlled, so that the unified information unit of the at least one unified information unit to be accessed or controlled is accessible or controllable.

18. The method according to claim 1, further comprising a step of grouping and placing the at least one unified information unit and/or the at least one unified tool in a specific area of the personal workspace.

19. The method according to claim 1, further comprising a step of adding or deleting the at least one unified information unit in the personal workspace and/or loading or unloading the at least one unified tool in the personal workspace.

20. The method according to claim 1, wherein the at least one information source includes an internet service, a storage medium of a non-transitory computer or a storage medium of a mobile device, and/or the at least one original information includes a file, a web page, a database row, a policy, a rule, or any information accessible from a corresponding machine or a server, and/or the at least one original tool includes a utility, a widget, an intelligent agent, an application, a service or any executable element accessible from a corresponding machine or a server.

21. The method according to claim 1, wherein the at least one unified information unit includes a metadata of the at least one unified tool.

22. A method for combining unified matters in a personal workspace, the method comprising steps of:
allowing at least one matterizer, at least one unified information unit corresponding to at least one original information and/or at least one unified tool corresponding to at least one original tool to be provided to the personal workspace via a unified script; and
performing a task by using the at least one unified tool and/or the at least one unified information unit.

23. The method according to claim 22, wherein the at least one matterizer comprises at least one information importer, wherein the at least one unified information unit is provided to the personal workspace after the at least one original information is unified into the at least one unified information unit via the at least one information importer, and/or the at least one unified tool is provided to the personal workspace after the at least one original tool is unified into the at least one unified tool via the at least one information importer.

24. The method according to claim 22, wherein the united script is declared by a document type definition (DTD), an extensible markup language (XML) Schema, a structured language or a structured protocol.

25. A computer program product for performing a task in a personal workspace, the computer program product comprising a program code, wherein while the computer program product is executed in a computer, the program code performs steps of:
allowing at least one matterizer, at least one unified information unit corresponding to at least one original information and/or at least one unified tool corresponding to at least one original tool to be provided to the personal workspace via a unified script; and
performing the task by using the at least one unified tool and/or the at least one unified information unit.

26. The computer program product according to claim 25, wherein the at least one matterizer comprises at least one information importer, wherein the at least one unified information unit is provided to the personal workspace after the at least one original information is unified into the at least one unified information unit via the at least one information importer, and/or the at least one unified tool is provided to the personal workspace after the at least one original tool is unified into the at least one unified tool via the at least one information importer.

27. The computer program product according to claim 25, wherein the united script is declared by a document type definition, an extensible markup language schema, a structured language or a structured protocol.

28. A system for combining unified matters in a personal workspace, the system comprising:
a first means for allowing at least one matterizer, at least one unified information unit corresponding to at least one original information and/or at least one unified tool corresponding to at least one original tool to be provided to the personal workspace via a unified script; and
a second means for performing a task by using the at least one unified tool and/or the at least one unified information unit.

29. The system according to claim 28, wherein the at least one matterizer comprises at least one information importer, wherein the at least one unified information unit is provided to the personal workspace after the at least one original information is unified into the at least one unified information unit via the at least one information importer, and/or the at least one unified tool is provided to the personal workspace after the at least one original tool is unified into the at least one unified tool via the at least one information importer.

30. The system according to claim 28, wherein the united script is declared by a document type definition, an extensible markup language schema, a structured language or a structured protocol.
